# EUROPEAN PATENT SPECIFICATION

(11) **EP 3 956 368 B1**
(45) Date of publication and mention of the grant of the patent: **27.05.2026**
(21) Application number: 19925199.2
(22) Date of filing: 18.04.2019
(51) Int. Cl.: C08G 18/24, C08F 220/18, C08F 2/44, C08G 18/10

(54) **LATENT CATALYST**
LATENTER KATALYSATOR
CATALYSEUR LATENT

(43) Date of publication of application: 23.02.2022
(73) Proprietor: Dow Global Technologies LLC, Midland, MI 48674 (US)
(72) Inventor: BAI, Chenyan, Shanghai 201203 (CN); CHEN, Hongyu, Shanghai 201203 (CN); SCHMIDT, Thorsten, 8810 Horgen (CH); YU, Yingfeng, Shanghai 200438 (CN); DONG, Haijun, Shanghai 200438 (CN)
(74) Representative: Boult Wade Tennant LLP
(86) International application number: PCT/CN2019/083167
(87) International publication number: WO 2020/211031

(56) References cited:
- CN-A- 105 849 207
- US-A1- 2001 007 881
- US-B2- 8 974 905
- GAO YANG ET AL: "Tin-Containing Crystalline Copolymers as Latent Catalysts for Polyurethanes", ACS APPLIED POLYMER MATERIALS, vol. 2, no. 11, 31 August 2020 (2020-08-31), pages 4531 - 4540, XP055959137, ISSN: 2637-6105, DOI: 10.1021/acsapm.0c00627
- LIU YUNQIAO: "SYNTHESIS AND COPOLYMERIZAION OF DIBUTYLTIN MALEATE", ACTA POLYMERICA SINICA, vol. 1997, no. 2, April 1997 (1997-04-01), pages 227 - 229, XP055754880, DOI: 20200117092040Y

## Description

### FIELD

The present invention relates to latent catalysts; and more specifically, the present invention relates to a copolymerized crystalline polymer latent catalyst useful for various curable formulations.

### BACKGROUND

Thermosetting resins and other curable compositions or formulations have been required to have a storage stability at ordinary operating temperature for the purpose of simplifying the handling thereof, and various latent catalysts have previously been developed for such purpose. In general, a latent catalyst means a catalyst having excellent storage stability at ordinary operating temperature (e.g., ambient temperature, i.e., 25 °C). A latent catalyst that has excellent storage stability will not exhibit its catalytic activity (will not promote curing or become active) at the ordinary operating low temperature until heated to a temperature higher than the operating temperature. Thus, the catalyst will be catalytic active upon heating at elevated temperatures. Latent catalysts are used in formulations to improve the storage stability (also referred to as storage life or pot-life) of the formulations. However, it is also desirable to provide formulations with excellent curability such that when the latent catalyst is activated to cure, the formulation will cure at a fast curing speed.

US-A-2001/007881 relates to polymeric modifying agents. Example 11 provides a catalyst composition comprising the reaction product of 50 g docosanyl acrylate, 50 g tri-n-butyl tin mathacrylate, 4 g dodecyl mercaptan and 0.5 g azobisisobutyronitrile (AIBN).

The processes for producing latent catalysts useful for various formulations to promote the reaction of the components in the formulation are known. For example, known prior art processes for producing a latent catalyst include, among others, for example, catalyst encapsulation methods; photo-initiated catalyst methods; blocked catalyst methods; catalyst methods that include a tin compound bonded with a ligand; and various methods using reactive components such as a tin compound reacted with zinc, organic lead, lead salt, amines, or acids.

In general, however, the above known prior art latent catalyst-producing processes suffer from one or more problems that prevents such known processes from producing a latent catalyst that provides a formulation which has both a long pot life and a fast curing speed. For example, an encapsulated catalyst is substantially isolated from contact with the reactive components until a sufficient pressure is applied to the catalyst to release the catalyst from encapsulation. In some thermally activated catalyst methods, the activation temperature is too high (e.g., 80 degrees Celsius [°C] to 140 °C) to accelerate cure; or the reaction is too complicated.

It is, therefore, desired to provide a latent catalyst that provides a formulation which has both a long pot life and a fast curing speed without the problems encountered by the prior art.

### SUMMARY

The present invention is directed to a latent catalyst prepared using a copolymerization process wherein the process includes grafting a catalyst into a crystalline polymer backbone to form a catalyst grafted crystalline polymer latent catalyst composition. The grafted latent catalyst can then be added to a curable formulation or composition. The grafted polymer latent catalyst remains inactive (deactivated) during a first operation temperature of the curable formulation which is below the melting point of the crystalline polymer. Thereafter, when the curable formulation is subjected to a second curing temperature, which is above the melting point of the crystalline polymer (i.e., a temperature higher than the operation temperature), the catalyst is activated (i.e., the catalyst is activated by heat when the temperature rises to the curing conditions) which then accelerates the reaction between the components in the curable formulation to cure. During the time the latent catalyst remains inactive at the first operation temperature, beneficially no significant compromise to the pot life of the curable formulation is observed.

The present invention relates to a copolymerized crystalline latent catalyst including the reaction product of: (a) at least one crystalline monomer compound, which is at least one crystalline acrylate monomer selected from the group consisting of octadecyl acrylate, octadecyl methacrylate, docosyl acrylate, docosyl methacrylate, and mixtures thereof, for example crystalline octadecyl acrylate (e.g., 18AA available from Scientific Polymer) that forms a crystalline polymer; (b) at least one a copolymerizable catalyst which is dibutyltin maleate (DBTM) that can be grafted into the crystalline polymer backbone to form a catalyst grafted crystalline polymer latent catalyst; (c) at least one initiator such as 2,2'-azobisisobutyro nitrile (AIBN); and (d) at least one chain transfer agent such as dodecyl mercaptan (DDM). In another embodiment, the above catalyst can include, as component (e), at least one solvent such as toluene.

The present invention includes a process for producing the above copolymerized crystalline latent catalyst. The process or method for making the copolymerized crystalline latent catalyst relates to a copolymerization method used to polymerize the copolymerizable catalyst DBTM with a crystalline polymer, resulting from the polymerization of at least one crystalline acrylate monomer selected from the group consisting of octadecyl acrylate, octadecyl methacrylate, docosyl acrylate, docosyl methacrylate, and mixtures thereof, such as crystalline octadecyl acrylate (e.g., 18AA) to fix the catalyst to the crystalline polymer; and thus, forming a catalyst structure. In one embodiment, for example, the copolymerization method of the present invention forms a catalyst structure such as the structure shown in Scheme (I) as follows:

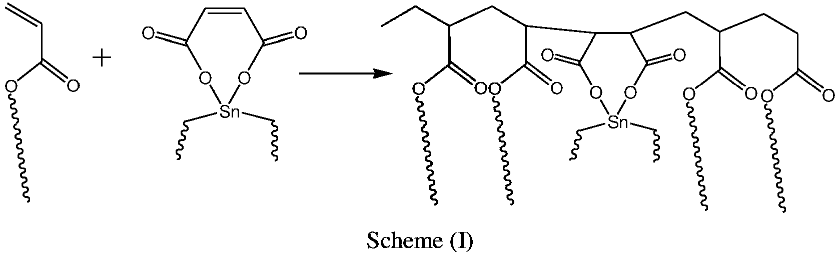

Some of the advantages of the present invention latent catalyst include providing: (1) a curable formulation containing the latent catalyst of the present invention that exhibits an excellent pot life; (2) a latent catalyst that can be activated at a low activation temperature (e.g., less than 80 °C) and that will not compromise the pot life of the formulation containing such latent catalyst; and (3) a curable formulation containing the latent catalyst of the present invention that does not include complicated reaction components.

### DETAILED DESCRIPTION

"Latency", with reference to a catalyst, herein means the catalyst does not catalyze a reaction at certain conditions, such as the temperature of the operation, while the catalyst does start to catalyze the same reaction under other different conditions (such as by raising the temperature of the reaction).

A "thermal latent catalyst" is a catalyst that is not in its active state at a first low temperature (e.g., at a room temperature of 25 °C) until the catalyst is heated to a second high temperature (e.g., 40 °C).

"Pot-life", with reference to a curable formulation, herein means the period of time before the viscosity of the curable formulation builds up to the point that the curable formulation is no longer suitable to be handled in an application.

The latent catalyst composition of the present invention includes a copolymerized crystalline latent catalyst wherein the catalyst is the reaction product of: (a) at least one crystalline polymer which is a polymer made from a crystalline acrylate monomer selected from the group consisting of octadecyl acrylate, octadecyl methacrylate, docosyl acrylate, docosyl methacrylate, and mixtures thereof; (b) at least one copolymerizable catalyst compound which is DBTM; (c) at least one initiator such as AIBN; (d) at least one chain transfer agent such as DDM; and (e) optionally, at least one solvent such as toluene. By using a copolymerization method, the resulting copolymerized DBTM catalyst provides desired latency at the operation temperature and starts catalyzing effect at an elevated temperature.

The crystalline acrylate monomer compound useful in the present disclosure, and not encompassed by the wording of the claims, can be selected from the acrylate monomers with long alkyl chains (for example, alkyl chains having carbons in the range of from 14 carbons to 22 carbons), for example, one or more of the following compounds: tetradecyl acrylate, tetradecyl methacrylate, hexadecyl methacrylate, hexadecyl acrylate, octadecyl acrylate, octadecyl methacrylate, docosyl acrylate, docosyl methacrylate, and mixtures thereof. In the present invention, the crystalline acrylate monomer compound is selected from octadecyl acrylate, octadecyl methacrylate, docosyl acrylate, docosyl methacrylate, and mixtures thereof. In another preferred embodiment, the crystalline acrylate monomer compound used in the present invention is octadecyl acrylate.

The amount of crystalline acrylate monomer compound used to prepare the catalyst composition of the present invention can be, for example, from 42 weight percent (wt %) to 92 wt % in one embodiment, from 47 wt % to 90 wt % in another embodiment and from 52 wt % to 88 wt % in still another embodiment.

The copolymerizable catalyst compound useful in the present disclosure, but not encompassed by the wording of the claims, can include, for example, a tin-containing catalyst compound, and any other catalyst that having radical polymerizable double bond and mixtures thereof. For example, in one preferred embodiment, a tin-containing catalyst can be used in the present invention; and the tin-containing catalyst can include any catalyst compound containing a polymerizable C=C bond. The copolymerizable catalyst compound used in the present invention is dibutyltin maleate (DBTM).

The amount of copolymerizable catalyst compound used to prepare the catalyst composition of the present invention can be, for example, from 1 wt % to 50 wt % in one embodiment, from 3 wt % to 45 wt % in another embodiment and from 5 wt % to 40wt % in still another embodiment.

An initiator is employed in the present invention latent catalyst composition to aid in initiating the polymerization of the acrylate monomer. Conventional initiators can be used and include, for example, azo compound initiators, organic peroxides, organic hydroperoxides, and mixtures thereof. Typical initiators useful in the present invention include, for example, azo initiators such as 2,2'- azobisisobutyronitrile, 2,2'- azobis-2-methyl butyronitrile, 2,2'- azobis(2,4-dimethyl pentane nitrile), 2,2'- azobis(2-methyl-propane nitrile), 2,2'- azobis(2-methyle butane nitrile), 1,1'- azo(cyclohexane carbonitrile), 4,4'- azo-bis(4-cyanopentanoic)acid, and mixtures thereof. In one preferred embodiment, 2,2'- azobisisobutyro nitrile is used in the present invention as the initiator.

The amount of initiator used to prepare the latent catalyst composition of the present invention can be from 0.01 wt % to 5 wt % in one embodiment, from 0.1 wt % to 4 wt % in another embodiment, and from 0.2 wt % to 3 wt % in still another embodiment, based on the total weight of the final composition.

A chain transfer agent is employed in the present invention latent catalyst composition to control molecular weight of the final polymer. Conventional chain transfer agents can be used and include, for example, thiols such as dodecyl mercaptan (DDM) and dodecanethiol (DDA); and halocarbons such as carbon tetrachloride, and mixtures thereof. In one preferred embodiment, DDM is used in the present invention.

The amount of chain transfer agent used in the present invention can be from 0.01 wt % to 10 wt % in one embodiment, from 0.5 wt % to 9 wt % in another embodiment, and from 1 wt % to 8 wt % in still another embodiment, based on the total weight of the final composition.

Polymerization to form the copolymerized crystalline latent catalyst of the present invention can be conducted in the presence of a solvent. In one general embodiment, conventional solvents that can solubilize the acrylate monomer and DBTM is used in the present invention latent catalyst composition. For example, the solvent can be benzene, toluene, and mixtures thereof. In one preferred embodiment, toluene is used in the present invention.

The amount of solvent, such as toluene, used in the present invention can be from 60 wt % to 200 wt % in one embodiment, from 80 wt % to 180 wt % in another embodiment, and from 100 wt % to 160 wt % in still another embodiment, based on the total weight of the final composition.

In a general embodiment, the process for making the copolymerized crystalline latent catalyst composition of the present invention includes the steps of:
(I) admixing (a) at least one crystalline acrylate monomer compound, which is the crystalline acrylate monomers described above; (b) at least one copolymerizable catalyst compound, which is the catalyst compounds described above; (c) at least one initiator such as AIBN described above; (d) at least one chain transfer agent such as DDM described above; and (e) optionally, at least one first solvent such as toluene described above;
(II) mixing further the components of step (I) to form a homogeneous mixture;
(III) increasing the temperature of the mixture of step (II), while agitating the mixture, up to a temperature of from 60 °C to 80 °C and maintaining the mixture at this temperature for 24 hours (hr), until a copolymer in a solvent solution is formed;
(IV) precipitating the copolymer from the solvent solution into a second solvent such as methanol; and
(V) heating the precipitation from step (IV) to a temperature of 40 °C in a vacuum oven to strip any residual solvent for 24 hr to form a final copolymerized crystalline latent catalyst after the solvent is stripped.

Once the copolymerized crystalline latent catalyst of the present invention is made, the latent catalyst can be added to a curable formulation to provide a curable composition that does not cure at a first low temperature and that has excellent storage stability (pot life) at the first low temperature. The first low temperature comprises a temperature below the melting temperature of the copolymerized crystalline latent catalyst. The copolymerized crystalline latent catalyst of the present invention can exhibit crystalline behavior, that is, the catalyst can melt and start to flow when the catalyst is subjected to a second high temperature above the melting point of the catalyst. And, the catalyst can start to crystallize and become solid again when the catalyst is subjected to a first low temperature, viz, at temperature below the melting point of the catalyst. For example, the copolymerized crystalline latent catalyst has a melting point of from 45 °C to 60 °C; and has a crystalline temperature of from 40 °C to 55 °C.

In addition, the copolymerized crystalline latent catalyst can be added to a curable formulation to provide a curable composition that exhibits fast curing or fast bond strength development. For example, the curable formulation exhibits a higher bond strength at the same curing time when the curable formulation is heated at an elevated curing temperature, for example, 50 °C to 60 °C. The melting point and crystalline temperature of the catalyst can be tested by any conventional method. For example, in one preferred embodiment the melting point and crystalline temperature of the catalyst is measured using a differential scanning calorimetry (DSC) method.

In one broad embodiment, the copolymerized crystalline latent catalyst of the present invention can be used as the catalyst for a curable polyurethane composition or formulation that requires latency. As one example of an application where the copolymerized crystalline latent catalyst can be used, and not to be limited thereby, the copolymerized crystalline latent catalyst can be added to a polyurethane curable formulation to produce an adhesive formulation.

### EXAMPLES

The following examples are presented to further illustrate the present invention in detail but are not to be construed as limiting the scope of the claims. Unless otherwise indicated, all parts and percentages are by weight.

Various terms and designations and raw materials (or ingredients) used in the Inventive Examples (Inv. Ex.) and the Comparative Examples (Comp. Ex.) which follow are explained in the following Table I.

**Table I - Raw Materials**

| Ingredient Name | Ingredient | Brief Description | Supplier |
|---|---|---|---|
| 18AA | octadecyl acrylate | crystalline acrylate monomer | Scientific Polymer (SP) |
| 22AA | docosyl acrylate | crystalline acrylate monomer | SP |
| AIBN | azobisisobutyronitrile | initiator | Sinopharm Chemical Reagent (SCR) |
| DBTM | dibutyltin maleate | catalyst | SCR |
| DDA | dodecanethiol | chain transfer agent | SCR |

### Synthesis of Copolymerized Crystalline Latent Catalyst

The copolymerizable crystalline catalyst of the present invention was prepared in a toluene solution according to the following process: A crystalline acrylate monomer, DBTM, initiator AIBN, a chain extender and toluene were mixed together with slow agitation. Then, the temperature of the resulting mixture was increased to a temperature of 60 °C to 80 °C with continuous agitation; and the temperature of the mixture was maintained at 60 °C to 80 °C for 24 hr. Thereafter, the agitation of the mixture was stopped and cooled down. The resulting copolymers were precipitated into methanol and the precipitation was put into a 40 °C vacuum oven for 24 hr to strip any residual solvent. The final copolymerized catalyst was achieved after the above stripping step.

### Examples 1 - 4

Four latent catalyst samples of the present invention (Inv. Ex. 1-4) were prepared using the above described procedure for synthesizing a copolymerizable crystalline catalyst. In each of the catalyst samples prepared, the DBTM concentration and the acrylate monomer type were changed; and each of the resulting copolymers obtained showed a crystalline temperature and a melting temperature. The detailed information of the above samples is listed in Table II.

**Table II - Copolymerized Crystalline Catalysts**

| Example No. | Composition Components | DBTM (wt %) | Crystalline Temperature (°C) | Melting Temperature (°C) |
|---|---|---|---|---|
| Inv. Ex. 1 | 22AA/DBTM | 5 | 53.1 | 58.9 |
| Inv. Ex. 2 | 22AA/DBTM | 15 | 50.2 | 55.6 |
| Inv. Ex. 3 | 22AA/DBTM | 40 | 48.1 | 53.2 |
| Inv. Ex. 4 | 18AA/DBTM | 15 | 41.4 | 49.4 |

The utility of the latent catalysts produced as described above will be apparent to those skilled in the art; and, for example, in one embodiment the latent catalysts can be used as an additive in a conventional polyurethane formulation wherein the polyurethane formulation includes an isocyanate (NCO) prepolymer component such as MF706A (available from The Dow Chemical Company) and a hydroxyl (OH) component such as C79 (available from The Dow Chemical Company).

## Claims

1. A copolymerized crystalline latent catalyst comprising the reaction product of:
(a) at least one crystalline acrylate monomer selected from the group consisting of octadecyl acrylate, octadecyl methacrylate, docosyl acrylate, docosyl methacrylate, and mixtures thereof;
(b) at least one copolymerizable catalyst compound that is dibutyltin maleate;
(c) at least one initiator; and
(d) at least one chain transfer agent.

2. The catalyst of claim 1, including further (e) at least one solvent.

3. The catalyst of claim 1, wherein the concentration of the crystalline acrylic monomer is from 42 weight percent to 92 weight percent.

4. The catalyst of claim 1, wherein the concentration of the copolymerizable catalyst compound is from 1 weight percent to 50 weight percent.

5. The catalyst of claim 1, wherein the melting point of the catalyst is from 45 °C to 60 °C, wherein the melting point is measured using a differential scanning calorimetry (DSC) method.

6. The catalyst of claim 1, wherein the crystalline temperature of the catalyst is from 40 °C to 55 °C, wherein the crystalline temperature is measured using a differential scanning calorimetry (DSC) method.

7. A process for making a copolymerized crystalline latent catalyst comprising the steps of:
(I) admixing (a) at least one crystalline acrylate monomer selected from the group consisting of octadecyl acrylate, octadecyl methacrylate, docosyl acrylate, docosyl methacrylate, and mixtures thereof; (b) at least one copolymerizable catalyst compound that is dibutyltin maleate; (c) at least one initiator; and (d) at least one chain transfer agent; and
(II) heating the mixture of step (I) at a temperature sufficient for the components of the mixture to react and form a copolymerized crystalline latent catalyst.

8. The process of claim 7, wherein step (I) includes further (e) at least one solvent.

9. A crystalline latent catalyst composition comprising a mixture of:
(a) at least one crystalline acrylate monomer selected from the group consisting of octadecyl acrylate, octadecyl methacrylate, docosyl acrylate, docosyl methacrylate, and mixtures thereof;
(b) at least one copolymerizable catalyst compound that is dibutyltin maleate;
(c) at least one initiator; and
(d) at least one chain transfer agen

10. The catalyst composition of claim 9 including further (e) at least one solvent.

11. A process for making a crystalline latent catalyst composition comprising admixing:
(a) at least one crystalline acrylate monomer selected from the group consisting of octadecyl acrylate, octadecyl methacrylate, docosyl acrylate, docosyl methacrylate, and mixtures thereof;
(b) at least one copolymerizable catalyst compound that is dibutyltin maleate;
(c) at least one initiator; and
(d) at least one chain transfer agent.

## Patentansprüche

1. Copolymerisierter kristalliner latenter Katalysator, umfassend das Reaktionsprodukt von:
(a) mindestens einem kristallinen Acrylatmonomer, das aus der Gruppe ausgewählt ist, bestehend aus Octadecylacrylat, Octadecylmethacrylat, Docosylacrylat, Docosylmethacrylat und Mischungen davon;
(b) mindestens einer copolymerisierbaren Katalysatorverbindung, die Dibutylzinnmaleat ist;
(c) mindestens einem Initiator; und
(d) mindestens einem Kettenübertragungsregler.

2. Katalysator nach Anspruch 1, ferner einschließend (e) mindestens ein Lösungsmittel.

3. Katalysator nach Anspruch 1, wobei die Konzentration des kristallinen Acrylmonomers von 42 Gewichtsprozent bis 92 Gewichtsprozent beträgt.

4. Katalysator nach Anspruch 1, wobei die Konzentration der copolymerisierbaren Katalysatorverbindung von 1 Gewichtsprozent bis 50 Gewichtsprozent beträgt.

5. Katalysator nach Anspruch 1, wobei der Schmelzpunkt des Katalysators von 45 °C bis 60 °C beträgt, wobei der Schmelzpunkt unter Verwendung eines dynamischen Differenzkalorimetrieverfahrens (DSC-Verfahrens) gemessen wird.

6. Katalysator nach Anspruch 1, wobei die kristalline Temperatur des Katalysators von 40 °C bis 55 °C beträgt, wobei die kristalline Temperatur unter Verwendung eines dynamischen Differenzkalorimetrieverfahrens (DSC-Verfahrens) gemessen wird.

7. Prozess zum Herstellen eines copolymerisierten kristallinen latenten Katalysators, umfassend die Schritte:
(I) Beimischen (a) mindestens eines kristallinen Acrylatmonomers, das aus der Gruppe ausgewählt ist, bestehend aus Octadecylacrylat, Octadecylmethacrylat, Docosylacrylat, Docosylmethacrylat und Mischungen davon; (b) mindestens einer copolymerisierbaren Katalysatorverbindung, die Dibutylzinnmaleat ist; (c) mindestens eines Initiators; und (d) mindestens eines Kettenübertragungsreglers; und
(II) Erwärmen der Mischung aus Schritt (I) bei einer Temperatur, die ausreicht, damit die Komponenten der Mischung reagieren und einen copolymerisierten kristallinen latenten Katalysator ausbilden.

8. Prozess nach Anspruch 7, wobei Schritt (I) ferner (e) mindestens ein Lösungsmittel einschließt.

9. Kristalline latente Katalysatorzusammensetzung, umfassend eine Mischung aus:
(a) mindestens einem kristallinen Acrylatmonomer, das aus der Gruppe ausgewählt ist, bestehend aus Octadecylacrylat, Octadecylmethacrylat, Docosylacrylat, Docosylmethacrylat und Mischungen davon;
(b) mindestens einer copolymerisierbaren Katalysatorverbindung, die Dibutylzinnmaleat ist;
(c) mindestens einem Initiator; und
(d) mindestens einem Kettenübertragungsregler.

10. Katalysatorzusammensetzung nach Anspruch 9, ferner einschließend (e) mindestens ein Lösungsmittel.

11. Prozess zum Herstellen einer kristallinen latenten Katalysatorzusammensetzung, umfassend das Beimischen von:
(a) mindestens einem kristallinen Acrylatmonomer, das aus der Gruppe ausgewählt ist, bestehend aus Octadecylacrylat, Octadecylmethacrylat, Docosylacrylat, Docosylmethacrylat und Mischungen davon;
(b) mindestens einer copolymerisierbaren Katalysatorverbindung, die Dibutylzinnmaleat ist;
(c) mindestens einem Initiator; und
(d) mindestens einem Kettenübertragungsregler.

## Revendications

1. Catalyseur latent cristallin copolymérisé comprenant le produit de réaction de :
(a) au moins un monomère d'acrylate cristallin choisi dans le groupe constitué d'acrylate d'octadécyle, méthacrylate d'octadécyle, acrylate de docosyle, méthacrylate de docosyle, et mélanges de ceux-ci ;
(b) au moins un composé catalyseur copolymérisable qui est le maléate de dibutylétain ;
(c) au moins un initiateur ; et
(d) au moins un agent de transfert de chaîne.

2. Catalyseur selon la revendication 1, comportant en outre (e) au moins un solvant.

3. Catalyseur selon la revendication 1, dans lequel la concentration du composé acrylate cristallin va de 42 pour cent en poids à 92 pour cent en poids.

4. Catalyseur selon la revendication 1, dans lequel la concentration du composé catalyseur copolymérisable va de 1 pour cent en poids à 50 pour cent en poids.

5. Catalyseur selon la revendication 1, dans lequel le point de fusion du catalyseur va de 45 °C à 60 °C, dans lequel le point de fusion est mesuré à l'aide d'un procédé de calorimétrie différentielle à balayage (DSC).

6. Catalyseur selon la revendication 1, dans lequel la température cristalline du catalyseur va de 40 °C à 55 °C, dans lequel la température cristalline est mesurée à l'aide d'un procédé de calorimétrie différentielle à balayage (DSC).

7. Procédé de préparation d'un catalyseur latent cristallin copolymérisé comprenant les étapes consistant à :
(I) mélanger (a) au moins un monomère d'acrylate cristallin choisi dans le groupe constitué d'acrylate d'octadécyle, méthacrylate d'octadécyle, acrylate de docosyle, méthacrylate de docosyle, et mélanges de ceux-ci ; (b) au moins un composé catalyseur copolymérisable qui est le maléate de dibutylétain ; (c) au moins un initiateur ; et (d) au moins un agent de transfert de chaîne ; et
(II) chauffer le mélange de l'étape (I) à une température suffisante pour que les composants du mélange réagissent et forment un catalyseur latent cristallin copolymérisé.

8. Procédé selon la revendication 7, dans lequel l'étape (I) comporte en outre (e) au moins un solvant.

9. Composition de catalyseur latent cristallin comprenant un mélange de :
(a) au moins un monomère d'acrylate cristallin choisi dans le groupe constitué d'acrylate d'octadécyle, méthacrylate d'octadécyle, acrylate de docosyle, méthacrylate de docosyle, et mélanges de ceux-ci ;
(b) au moins un composé catalyseur copolymérisable qui est le maléate de dibutylétain ;
(c) au moins un initiateur ; et
(d) au moins un agent de transfert de chaîne.

10. Composition de catalyseur selon la revendication 9, comportant en outre (e) au moins un solvant.

11. Procédé de préparation d'une composition de catalyseur latent cristallin comprenant le mélange de :
(a) au moins un monomère d'acrylate cristallin choisi dans le groupe constitué d'acrylate d'octadécyle, méthacrylate d'octadécyle, acrylate de docosyle, méthacrylate de docosyle, et mélanges de ceux-ci ;
(b) au moins un composé catalyseur copolymérisable qui est le maléate de dibutylétain ;
(c) au moins un initiateur ; et
(d) au moins un agent de transfert de chaîne.
